# EUROPÄISCHE PATENTSCHRIFT

(11) **EP 3 872 373 B1**
(45) Veröffentlichungstag und Bekanntmachung des Hinweises auf die Patenterteilung: **02.08.2023**
(21) Anmeldenummer: 21156304.4
(22) Anmeldetag: 10.02.2021
(51) Int. Cl.: F16J 15/3212, F03D 80/00, F16J 15/322, F16J 15/3232

(54) **DICHTRING UND DESSEN VERWENDUNG**
SEAL RING AND ITS USE
BAGUE D'ÉTANCHÉITÉ ET SON UTILISATION

(30) Priorität: 27.02.2020 DE 102020105149
(43) Veröffentlichungstag der Anmeldung: 01.09.2021
(73) Patentinhaber: Carl Freudenberg KG, 69469 Weinheim (DE)
(72) Erfinder: Koch, Andreas, 22393 Hamburg (DE); Segbers, Thomas, 21271 Asendorf (DE); Fritz, Jan, 21037 Hamburg (DE); Minners, Mirko, 21129 Hamburg (DE); Scheffler, Stefan, 21220 Seevetal (DE); Shimizu, Akio, 22527 Hamburg (DE)

(56) Entgegenhaltungen:
- WO-A1-2019/004141
- WO-A1-2019/239891
- CN-U- 206 234 363
- CN-U- 206 246 541
- CN-Y- 201 078 474

## Beschreibung

### Technisches Gebiet

Die Erfindung betrifft einen Dichtring und dessen Verwendung, wobei der Dichtring, im Querschnitt betrachtet, 7-förmig ausgebildet ist, umfassend einen ersten Axialschenkel und einen Dichtschenkel mit einer Dichtlippe, wobei der Dichtschenkel mittels eines Gelenks mit einer ersten Stirnseite des Axialschenkels verbunden ist, wobei der Dichtschenkel auf seiner der ersten Stirnseite axial zugewandten Seite eine Schmutzlippe mit zumindest einer Dichtkante und einer radial inneren ersten Begrenzungsfläche und einer radial äußeren zweiten Begrenzungsfläche aufweist, wobei der Dichtschenkel und die Schmutzlippe im herstellungsbedingten Zustand des Dichtrings radial innen- und radial außenseitig einen im Wesentlichen rechten Winkel begrenzen, wobei, jeweils im herstellungsbedingten Zustand des Dichtrings, die Dichtlippe einen ersten Durchmesser und die Dichtkante einen zweiten Durchmesser aufweist und wobei der erste Durchmesser kleiner als der zweite Durchmesser ist.

### Stand der Technik

Ein solcher Dichtring ist aus der CN 206246541 U bekannt. Die Dichtlippe ist, bezogen auf die Schmutzlippe, vergleichsweise lang und elastisch nachgiebiger ausgebildet.

Aus den Dokumenten WO 2019/239891, CN 201078474 Y, WO 2019/004141 A1 und CN 206234363 U sind weitere Dichtringe bekannt, umfassend eine Dichtlippe und eine Schmutzlippe, die der Dichtlippe in Richtung Umgebung vorgeschaltet ist. Auch bei diesen Dichtringen ist die Dichtlippe, bezogen auf die Schmutzlippe, vergleichsweise länger und elastisch nachgiebiger ausgebildet.

Ein weiterer Dichtring und dessen Verwendung sind aus der DE 10 2016 011 448 A1 bekannt.

Der Dichtring weist außerdem ein Spannelement zur Stabilisierung des Dichtschenkels in radialer Richtung auf. Das Spannelement ist ringförmig ausgebildet und, im Querschnitt betrachtet, durch eine 7-förmig ausgebildete Feder gebildet. Das Spannelement weist einen zweiten Axialschenkel und einen Stabilisierungsschenkel auf, wobei der zweite Axialschenkel mit dem ersten Axialschenkel und der Stabilisierungsschenkel mit dem Dichtschenkel verbunden ist.

Der vorbekannte Dichtring weist unabhängig von der Größe des abzudichtenden Durchmessers verbesserte Gebrauchseigenschaften während einer längeren Gebrauchsdauer auf. Unabhängig von der Einbausituation des Dichtrings berührt die Dichtlippe eine abzudichtende Oberfläche eines abzudichtenden Maschinenelements stets mit gleichbleibender radialer Vorspannung während einer langen Gebrauchsdauer dichtend. Durch das Spannelement spielt es für die guten Gebrauchseigenschaften keine Rolle, ob der Dichtschenkel mit seiner Dichtlippe radial innen des Dichtrings oder radial außen des Dichtrings angeordnet ist.

Ein weiterer Dichtring, der ein Spannelement zur Stabilisierung des Dichtschenkels in radialer Richtung umfasst, ist aus der EP 2 988 035 A1 bekannt.

Der vorbekannte Dichtring gelangt zu Abdichtung von Schmierfett zur Anwendung und umfasst ein Spannelement, das in einer Einbaunut des Dichtrings angeordnet ist. Die Einbaunut ist auf der der Dichtlippe radial abgewandten Seite des Dichtschenkels angeordnet, wobei die Einbaunut auf der der Dichtlippe radial abgewandten Seite eine Einbauöffnung für das Spannelement aufweist, die von zwei in axialer Richtung mit Abstand benachbart zueinander angeordneten Führungsstegen begrenzt ist. Das Gelenk ist, in radialer Richtung betrachtet und im herstellungsbedingten Zustand des Dichtrings, mittig des Dichtrings angeordnet. Ebenfalls in radialer Richtung mittig des Dichtrings ist im Bereich des Gelenks ein in axialer Richtung einseitig offener, im Wesentlichen C-förmig ausgebildeter Gelenkraum angeordnet. Dieser Gelenkraum ist derart ausgebildet, dass darin befindliches, abzudichtendes Medium aus diesem abgeleitet wird. Dadurch, dass sich kein abzudichtendes Medium innerhalb des Gelenkraums hält, wird eine unerwünschte Verhärtung des Dichtrings verhindert, und der Dichtschenkel vermag hohen dynamischen Auslenkbewegungen eines abzudichtenden Maschinenelements zu folgen, ohne dass sich die Anpresskräfte, mit denen die Dichtlippe das abzudichtende Maschinenelement dichtend berührt, nennenswert verändern.

Ein anderer Dichtring der eingangs genannten Art ist aus der DE 10 2009 053 558 A1 bekannt. Der Dichtring ist 7-förmig ausgebildet und umfasst einen in radialer Richtung vergleichsweise dicken ersten Axialschenkel und einen Dichtschenkel mit einer Dichtlippe, wobei der Dichtschenkel mittels eines Gelenks mit einer ersten Stirnseite des Axialschenkels verbunden ist. Ein separat erzeugtes Spannelement zur Stabilisierung des Dichtschenkels in radialer Richtung ist demgegenüber nicht vorgesehen. Das Gelenk ist, in radialer Richtung betrachtet und im herstellungsbedingten Zustand des Dichtrings, mittig des Dichtrings angeordnet. Die beiden Stirnseiten des Axialschenkels sind mit Erhebungen ausgebildet und mittels dieser Erhebungen in einem Einbauraum einer Dichtungsanordnung abgestützt, wobei durch die Erhebungen eine Verdrehung/ Verkippung des Dichtrings im Einbauraum während seiner bestimmungsgemäßen Verwendung verhindert wird. Die Erhebungen können als umfangsseitig umlaufende, in sich geschlossene Wülste ausgebildet sein, durch die sich eine besonders gute Klemmwirkung des Axialschenkels im Einbauraum ergibt.

Alle zuvor genannten Dichtringe weisen keine Einrichtung auf, die Verunreinigungen aus der Umgebung des Dichtrings an einem nachteiligen Vordringen bis zur Dichtlippe hindern würden.

### Darstellung der Erfindung

Der Erfindung liegt die Aufgabe zu Grunde, einen Dichtring der eingangs genannten Art derart weiterzuentwickeln, dass die Dichtlippe besser vor gebrauchsdauerverringernden Verunreinigungen aus der Umgebung des Dichtrings geschützt ist. Dadurch soll der Dichtring gleichbleibend gute Gebrauchseigenschaften während einer langen Gebrauchsdauer aufweisen. Die Gefahr einer Beschädigung/ Zerstörung der Dichtlippe soll dadurch minimiert werden.

Außerdem soll ein guter Kompromiss aus guter Dichtwirkung der Schmutzlippe einerseits und einem Betrieb der Schmutzlippe auf dem abzudichtenden Maschinenelement mit möglichst geringen Reibungsverlusten andererseits erreicht werden.

Außerdem sollen Verwendungen genannt werden, für die sich der erfindungsgemäße Dichtring besonders gut eignet.

Diese Aufgabe wird erfindungsgemäß mit den Merkmalen der Ansprüche 1 und 10 gelöst. Auf vorteilhafte Ausgestaltungen des Dichtrings nehmen die auf Anspruch 1 direkt oder indirekt rückbezogene Ansprüche Bezug.

Zur Lösung der Aufgabe ist es vorgesehen, dass die den rechten Winkel radial innen der Schmutzlippe begrenzende erste Begrenzungsfläche eine erste Länge und eine dritte Begrenzungsfläche des Dichtschenkels eine von der ersten Länge abweichende dritte Länge aufweist und dass die erste Länge größer als die dritte Länge ist.

Der Dichtschenkel und die Schmutzlippe begrenzen im herstellungsbedingten Zustand des Dichtrings radial innen und radial außenseitig einen im Wesentlichen rechten Winkel. Durch eine solche Ausgestaltung wird ein guter Kompromiss aus guter Dichtwirkung der Schmutzlippe einerseits und einem Betrieb der Schmutzlippe auf dem abzudichtenden Maschinenelement mit möglichst geringen Reibungsverlusten andererseits erreicht.

Dazu trägt auch bei, wenn, jeweils im herstellungsbedingten Zustand des Dichtrings betrachtet, die Dichtlippe einen ersten Durchmesser und die Dichtkante einen zweiten Durchmesser aufweist, wobei der erste Durchmesser kleiner als der zweite Durchmesser ist. Während der bestimmungsgemäßen Verwendung des Dichtrings, also in seinem eingebauten Zustand in eine Dichtungsanordnung, umschließt die Dichtlippe das abzudichtende Maschinenelement mit vergleichsweise größerer radialer Vorspannung als die Dichtkante.

Die zuvor beschriebenen, vorteilhaften Gebrauchseigenschaften werden dadurch weiter begünstigt, dass die den rechten Winkel radial innen der Schmutzlippe begrenzende erste Begrenzungsfläche eine erste Länge und eine dritte Begrenzungsfläche des Dichtschenkels eine von der ersten Länge abweichende dritte Länge aufweist, wobei die erste Länge größer als die dritte Länge ist.

Durch das Vorsehen einer Schmutzlippe auf der der Umgebung des Dichtrings zugewandten Seite der Dichtlippe ist diese wirkungsvoll vor einer Beaufschlagung mit Verunreinigungen geschützt. Insbesondere bei Verwendung des Dichtrings in einer stark verunreinigten Umgebung, ist die Schmutzlippe, die der Dichtlippe in Richtung Umgebung in einer funktionstechnischen Reihenschaltung vorgeschaltet ist, von hervorzuhebendem Vorteil. Die Verunreinigungen werden durch die Schmutzlippe an einem Vordringen zur Dichtlippe gehindert. Die durch die Schmutzlippe geschützte Dichtlippe funktioniert dadurch während einer langen Gebrauchsdauer gleichbleibend gut.

Die Schmutzlippe kann mittels eines zweiten Gelenks am Dichtschenkel angelenkt sein. Hierdurch ist von Vorteil, dass der Dichtschenkel und die Schmutzlippe funktionstechnisch gekoppelt sind. Bewegt sich der Dichtschenkel während der bestimmungsgemäßen Verwendung des Dichtrings in radialer Richtung nach außen oder innen, folgt die Schmutzlippe in entsprechender Weise, weil sie mittels des zweiten Gelenks am Dichtschenkel angelenkt ist. Durch die Anlenkung der Schmutzlippe am Dichtschenkel folgt die Schmutzlippe dem Dichtschenkel automatisch über seinen gesamten radialen Arbeitsbereich entsprechend, ohne die Funktion der Dichtlippe am Dichtschenkel nachteilig zu beeinflussen.

Das zweite Gelenk kann einen radial inneren Gelenkradius und einen radial äußeren Gelenkradius aufweisen, durch die die Schmutzlippe in den Dichtschenkel übergehend ausgebildet ist.

Weiter bevorzugt ist der innere Gelenkradius größer als der äußere.

Für die meisten Anwendungsfälle hat es sich als vorteilhaft bewährt, wenn das Verhältnis aus innerem Gelenkradius zu äußerem Gelenkradius zumindest 2 beträgt.

Durch die unterschiedliche Ausgestaltung der Gelenkradien kann deren individuelle Funktion unabhängig voneinander an den jeweiligen Anwendungsfall angepasst werden. Der radial innere Gelenkradius nimmt überwiegend Einfluss auf die Kontaktkraft, mit der die Schmutzlippe das abzudichtende Maschinenelement während der bestimmungsgemäßen Verwendung des Dichtrings anliegend umschließt. Je größer der Gelenkradius, desto stärker ist die Kontaktkraft.

Der radial äußere Gelenkradius beeinflusst demgegenüber die Flexibilität der Schmutzlippe in radialer Richtung. Je größer der Radius ist, desto geringer ist die Flexibilität der Schmutzlippe.

Der Dichtschenkel und die Schmutzlippe sind bevorzugt einstückig ineinander übergehend und materialeinheitlich ausgebildet und bestehen aus einem gummielastischen Dichtungswerkstoff. Hierbei ist von Vorteil, dass der Dichtring einen einfachen und teilearmen Aufbau aufweist und dadurch einfach und kostengünstig herstellbar ist. Durch die Einstückigkeit ist außerdem die Montage besonders einfach; die Gefahr montagebedingter Fehler beim Einbau des Dichtrings ist dadurch auf ein Minimum begrenzt.

Gemäß einer vorteilhaften Ausgestaltung kann es vorgesehen sein, dass die zweite Begrenzungsfläche entlang ihrer Erstreckung konvex ausgebildet ist. Die konvexe Geometrie der zweiten Begrenzungsfläche der Schmutzlippe ist erforderlich, um einen definierten Linienkontakt der Dichtkante der Schmutzlippe zu erreichen. Der Krümmungsradius der konvexen Begrenzungsfläche ist dabei so gewählt, dass ein Flächenkontakt der Schmutzlippe auf einem abzudichtenden Bauteil während der bestimmungsgemäßen Verwendung des Dichtrings und damit einhergehende verschlechterte Gebrauchseigenschaften sicher vermieden werden.

Auf der der Schmutzlippe axial abgewandten Seite des Dichtschenkels, vom Dichtschenkel in den ersten Axialschenkel übergehend, kann ein Spannelement angeordnet sein, zur Stabilisierung des Dichtschenkels in radialer Richtung. Ein solches Spannelement ist, wie eingangs bereits ausgeführt, aus der DE 10 2016 011 448 A1 bekannt.

Auch bei dem erfindungsgemäßen Dichtring kann das Spannelement ringförmig ausgebildet und, im Querschnitt betrachtet, durch eine 7-förmig ausgebildete Feder gebildet sein. Das Spannelement kann einen zweiten Axialschenkel und einen Stabilisierungsschenkel aufweisen, wobei der zweite Axialschenkel mit dem ersten Axialschenkel und der Stabilisierungsschenkel mit dem Dichtschenkel verbunden ist.

Das Spannelement, das eine Form aufweist, die der Form des gesamten Dichtrings entspricht, nämlich 7-förmig ausgebildet ist, bewirkt die vorteilhaften Gebrauchseigenschaften des Dichtrings unabhängig davon, ob der Dichtschenkel mit seiner Dichtlippe radial innen des Dichtrings oder radial außen des Dichtrings angeordnet ist.

Das Spannelement kann im Wesentlichen gleichschenklig ausgebildet sein.

Der Dichtring aus der eingangs genannten EP 2 988 035 A1 ist hauptsächlich für radial innendichtende Systeme vorgesehen. Der Dichtschenkel und die Dichtlippe sind radial innen des Dichtrings angeordnet, wobei die Dichtlippe eine abzudichtende Oberfläche eines abzudichtenden Maschinenelements, beispielsweise einer Welle, unter radialer Vorspannung dichtend umschließt.

Für radial außendichtende Systeme, wenn der Axialschenkel radial innenseitig angeordnet ist und sich der Dichtschenkel mit seiner Dichtlippe, ausgehend vom Axialschenkel radial nach außen erstreckt, sind als Spannelemente ausgebildete Ringwendelfedern von Nachteil. Ringwendelfedern werden aktuell als Zugfedern für innendichtende Systeme verwendet. Bei außendichtenden Systemen müsste eine solche Feder als Druckfeder ausgeführt sein. Dies ist prinzipiell möglich, erschwert jedoch häufig die Montage und eine zuverlässige Positionierung im Einbauraum der Feder. Die Gefahr des Herausspringens aus dem Einbauraum im Vergleich zu einer Zugfeder ist weitaus höher.

Bei dem erfindungsgemäßen Dichtring kann als Spannelement demgegenüber eine 7-förmig ausgebildete Feder verwendet werden, deren Gestalt an die Gestalt des Dichtrings angepasst ist. Ein solcher Dichtring hat den Vorteil, dass er auch gut in außendichtenden Systemen zur Anwendung gelangen kann, bei denen sich also der Dichtschenkel mit der Dichtlippe radial nach außen erstreckt und zum Beispiel eine eine Gehäusebohrung begrenzende Wandung dichtend berührt.

Die Gebrauchseigenschaften des Dichtrings sind stets gleichbleibend gut, unabhängig davon, ob die Dichtlippe radial innenseitig oder radial außenseitig des Dichtrings angeordnet ist. Durch die zuvor beschriebene Gestalt der Feder kommt die radiale Federkraft aus der radialen Bewegung der Feder. Dabei ist es für den Gebrauch unerheblich, ob es sich um ein außen- oder ein innendichtendes System handelt. Die Anpressung der Dichtlippe an eine abzudichtende Oberfläche erfolgt aufgrund der Biegung der Feder und ist damit durchmesserunabhängig umsetzbar.

Durch die 7-förmig ausgebildete Feder können vergleichsweise große radiale Auslenkbewegungen des abzudichtenden Maschinenelements gut ausgeglichen werden, ohne dass sich die Anpresskraft, mit der die Dichtlippe die abzudichtende Oberfläche dichtend berührt, nennenswert verändert.

Außerdem ist von Vorteil, dass die 7-förmig ausgebildete Feder einfach und kostengünstig herstellbar ist. Auch die Integration einer solchen Feder in einen Dichtring ist problemlos.

Gemäß einer vorteilhaften Ausgestaltung kann es vorgesehen sein, dass der zweite Axialschenkel im ersten Axialschenkel und der Stabilisierungsschenkel im Dichtschenkel eingebettet ist. Hierbei ist von Vorteil, dass die Feder einen integralen Bestandteil des Dichtrings bildet. Ein unerwünschter Verlust der Feder, sowohl bei der Lagerung des Dichtrings vor dessen Verwendung als auch während der bestimmungsgemäßen Verwendung im eingebauten Zustand, kann dadurch zuverlässig vermieden werden.

Der zweite Axialschenkel kann vom ersten Axialschenkel und der Stabilisierungsschenkel vom Dichtschenkel zumindest im Wesentlichen umschlossen sein. Hierbei ist von Vorteil, dass die Positionierung der Feder im Dichtring besonders zuverlässig und dauerhaltbar ist. Der Dichtring erscheint dabei trotz Verwendung der Feder praktisch einteilig, und der Montageaufwand des Dichtrings ist dadurch gering. Auch die Gefahr von Montagefehlern ist auf ein Minimum begrenzt.

Besonders vorteilhaft ist die Verwendung des zuvor beschriebenen Dichtrings in Tunnelbohrmaschinen oder Windkraftanlagen.

Generell hat es sich als vorteilhaft bezüglich der Gebrauchseigenschaften, insbesondere bezüglich der Gebrauchseigenschaften des Dichtrings in radial außendichtenden Systemen, herausgestellt, wenn das Gelenk zwischen erstem Axialschenkel und Dichtschenkel in radialer Richtung möglichst weit von der Dichtlippe entfernt angeordnet ist. Dadurch vermögen der Dichtschenkel und ebenfalls die am Dichtschenkel angelenkte Schmutzlippe radialen Auslenkbewegungen eines abzudichtenden Maschinenelements auch dann besonders gut zu folgen, wenn diese Auslenkbewegungen in radialer Richtung vergleichsweise groß sind. Die Größe der radialen Auslenkbewegungen ist abhängig vom abzudichtenden Durchmesser. Die abzudichtenden Durchmesser bei Windkraftanlagen können zum Beispiel 4 m betragen, die abzudichtenden Durchmesser bei Tunnelbohrmaschinen zum Beispiel 18 m. Durch das in radialer Richtung von der Dichtlippe möglichst weit entfernt angeordnete erste Gelenk und die daraus resultierende gute elastische Nachgiebigkeit von Dichtschenkel und Schmutzlippe, berühren die Dichtlippe und die Dichtkante die abzudichtende Oberfläche auch in einem solchen Fall mit einer gleichbleibend guten Anpressung und dadurch Dichtwirkung.

Die Schmutzlippe bewegt sich zusammen mit dem Dichtschenkel, an den sie angelenkt ist, in radialer Richtung gemeinsam. Dadurch wird die Dichtlippe des Dichtschenkels vor einer Beaufschlagung mit Verunreinigungen zuverlässig geschützt.

Der zuvor beschriebene Dichtring kann besonders bevorzugt in Tunnelbohrmaschinen, Windkraftanlagen oder anderen Radialanwendungen mit größeren radialen Auslenkbewegungen verwendet werden.

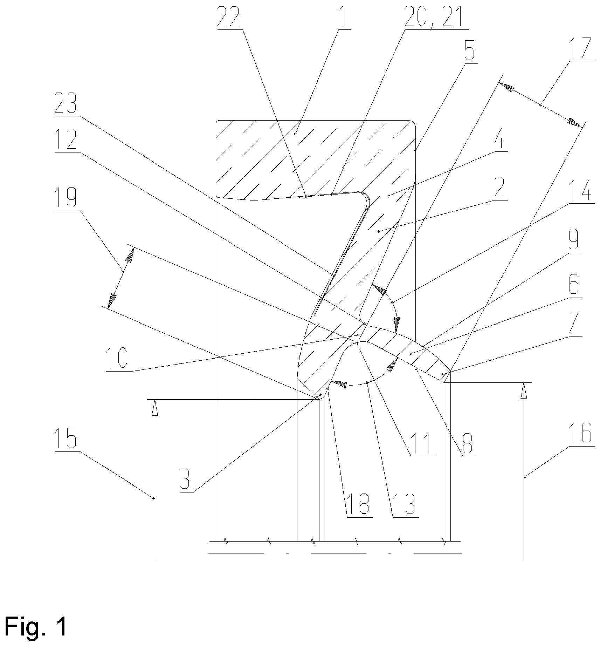

### Kurzbeschreibung der Zeichnung

Ein Ausführungsbeispiel des erfindungsgemäßen Dichtrings wird nachfolgen anhand der Figur näher erläutert.

In der Figur ist ein Ausführungsbeispiel des erfindungsgemäßen Dichtrings in schematischer Darstellung gezeigt.

### Ausführung der Erfindung

In der Figur ist ein Ausführungsbeispiel des erfindungsgemäßen Dichtrings gezeigt. Der Dichtring ist, im Querschnitt betrachtet, 7-förmig ausgebildet und umfasst den ersten Axialschenkel 1 und den Dichtschenkel 2 mit der Dichtlippe 3. Der Dichtschenkel 2 ist mittels des Gelenks 4 an der ersten Stirnseite 5 des ersten Axialschenkels 1 angelenkt.

Auf der der ersten Stirnseite 5 axial zugewandten Seite des Dichtschenkels 2 ist im radial inneren Bereich des Dichtschenkels 2 die Schmutzlippe 6 angeordnet, die die Dichtkante 7 umfasst. Die Schmutzlippe 6 hat radial innenseitig die erste Begrenzungsfläche 8 und radial außenseitig die zweite Begrenzungsfläche 9. Die erste Begrenzungsfläche 8 ist im Wesentlichen eben, die zweite Begrenzungsfläche 9 demgegenüber konvex ausgebildet.

Der Dichtschenkel 2 und die Schmutzlippe 6 sind einstückig ineinander übergehend und materialeinheitlich ausgebildet, bestehen aus einem gummielastischen Werkstoff und sind mittels des zweiten Gelenks 10 elastisch nachgiebig miteinander verbunden. Das zweite Gelenk 10 ist durch einen radial inneren Gelenkradius 11 und einen radial äußeren Gelenkradius 12 gebildet, die voneinander abweichend gestaltet sind. Der innere Gelenkradius 11 ist größer als der äußere Gelenkradius 12.

In der Figur ist der Dichtring in seinem herstellungsbedingten Zustand gezeigt, also nicht in eine Dichtungsanordnung eingebaut. Wie hier dargestellt, ragt die Schmutzlippe 6 im Wesentlichen senkrecht vom Dichtschenkel 2 ab, wobei der erste Durchmesser 15 der Dichtlippe 3 kleiner als der zweite Durchmesser 16 der Dichtkante 7 ist. Der Dichtschenkel 2 und die Schmutzlippe 6 begrenzen die im Wesentlichen rechten Winkel 13, 14.

Die den rechten Winkel 13 radial innen der Schmutzlippe 6 begrenzende erste Begrenzungsfläche 8 hat die erste Länge 17. Die dritte Begrenzungsfläche 18 des Dichtschenkels 2 hat die dritte Länge 19, die von der ersten Länge 17 abweichend ist. Die erste Länge 17 ist größer als die dritte Länge 19. Durch die dargestellte Geometrie der Schmutzlippe 6, die Geometrie des Dichtschenkels 2 radial innenseitig des zweiten Gelenks 10 und die Anlenkung der Schmutzlippe 6 am Dichtschenkel 2 wird erreicht, dass die Schmutzlippe 6 einen integralen Bestandteil des Dichtrings bildet und sich mit dem Dichtschenkel 2 gemeinsam in radialer Richtung bewegt. Die Dichtlippe 3 des Dichtschenkels 2 wird durch die Schmutzlippe 6 vor einer Beaufschlagung mit Verunreinigungen aus der Umgebung des Dichtrings während der bestimmungsgemäßen Verwendung des Dichtrings geschützt. Die Schmutzlippe 6 funktioniert über den gesamten Arbeitsbereich des Dichtrings, ohne die Funktion der Dichtlippe 3 nachteilig zu beeinflussen.

Auf der der Schmutzlippe 6 axial abgewandten Seite des Dichtschenkels 2, vom Dichtschenkel 2 in den ersten Axialschenkel 1 übergehend, ist das Spannelement 20 angeordnet. Das Spannelement 20 ist zur Stabilisierung des Dichtschenkels 2 in radialer Richtung vorgesehen. Das Spannelement 20 wird durch die Feder 21 gebildet, die im hier gezeigten Ausführungsbeispiel aus einem Federstahl besteht. Die Feder 21 weist den zweiten Axialschenkel 22 und den Stabilisierungsschenkel 23 auf, die jeweils an die Gestalt des ersten Axialschenkels 1 und des Dichtschenkels 2 angepasst, also ebenfalls 7-förmig ausgebildet sind.

### Bezugszeichenliste

- 1: erster Axialschenkel
- 2: Dichtschenkel
- 3: Dichtlippe von 2
- 4: erstes Gelenk zwischen 1 und 2
- 5: erste Stirnseite von 1
- 6: Schmutzlippe
- 7: Dichtkante von 6
- 8: radial innere erste Begrenzungsfläche von 6
- 9: radial äußere zweite Begrenzungsfläche von 6
- 10: zweites Gelenk zwischen 2 und 6
- 11: radial innerer Gelenkradius von 10
- 12: radial äußerer Gelenkradius von 10
- 13: rechter Winkel, radial innen
- 14: rechter Winkel, radial außen
- 15: erster Durchmesser von 3
- 16: zweiter Durchmesser von 7
- 17: erste Länge von 8
- 18: dritte Begrenzungsfläche von 2, radial innen von 6
- 19: dritte Länge von 18
- 20: Spannelement
- 21: Feder
- 22: zweiter Axialschenkel von 21
- 23: Stabilisierungsschenkel von 21

## Patentansprüche

1. Dichtring, der, im Querschnitt betrachtet, 7-förmig ausgebildet ist, umfassend einen ersten Axialschenkel (1) und einen Dichtschenkel (2) mit einer Dichtlippe (3), wobei der Dichtschenkel (2) mittels eines ersten Gelenks (4) mit einer ersten Stirnseite (5) des ersten Axialschenkels (1) verbunden ist, **wobei** der Dichtschenkel (2) auf seiner der ersten Stirnseite (5) axial zugewandten Seite eine Schmutzlippe (6) mit zumindest einer Dichtkante (7) und einer radial inneren ersten Begrenzungsfläche (8) und einer radial äußeren zweiten Begrenzungsfläche (9) aufweist, wobei der Dichtschenkel (2) und die Schmutzlippe (6) im herstellungsbedingten Zustand des Dichtrings radial innen- und radial außenseitig einen im Wesentlichen rechten Winkel (13, 14) begrenzen, wobei, jeweils im herstellungsbedingten Zustand des Dichtrings, die Dichtlippe (3) einen ersten Durchmesser (15) und die Dichtkante (7) einen zweiten Durchmesser (16) aufweist und wobei der erste Durchmesser (15) kleiner als der zweite Durchmesser (16) ist, **dadurch gekennzeichnet, dass** die den rechten Winkel (13) radial innen der Schmutzlippe (6) begrenzende erste Begrenzungsfläche (8) eine erste Länge (17) und eine dritte Begrenzungsfläche (18) des Dichtschenkels (2) eine von der ersten Länge (17) abweichende dritte Länge (19) aufweist und dass die erste Länge (17) größer als die dritte Länge (19) ist.

2. Dichtring nach Anspruch 1, **dadurch gekennzeichnet, dass** die Schmutzlippe (6) mittels eines zweiten Gelenks (10) am Dichtschenkel (2) angelenkt ist.

3. Dichtring nach Anspruch 2, **dadurch gekennzeichnet, dass** das zweite Gelenk (10) einen radial inneren Gelenkradius (11) und einen radial äußeren Gelenkradius (12) aufweist, durch die die Schmutzlippe (6) in den Dichtschenkel (2) übergehend ausgebildet ist.

4. Dichtring nach Anspruch 3, **dadurch gekennzeichnet, dass** der innere Gelenkradius (11) größer als der äußere Gelenkradius (12) ist.

5. Dichtring nach Anspruch 4, **dadurch gekennzeichnet, dass** das Verhältnis aus innerem Gelenksradius (11) zu äußerem Gelenksradius (12) zumindest zwei beträgt.

6. Dichtring nach einem der Ansprüche 1 bis 5, **dadurch gekennzeichnet, dass** der Dichtschenkel (2) und die Schmutzlippe (6) einstückig ineinander übergehend und materialeinheitlich ausgebildet sind und aus einem gummielastischen Dichtungswerkstoff bestehen.

7. Dichtring nach Anspruch 1, **dadurch gekennzeichnet, dass** die zweite Begrenzungsfläche (9) entlang ihrer Erstreckung konvex ausgebildet ist.

8. Dichtring nach einem der Ansprüche 1 bis 7, **dadurch gekennzeichnet, dass** auf der der Schmutzlippe (6) axial abgewandten Seite des Dichtschenkels (2), vom Dichtschenkel (2) in den ersten Axialschenkel (1) übergehend, ein Spannelement (20) angeordnet ist, zur Stabilisierung des Dichtschenkels (2) in radialer Richtung.

9. Dichtring nach Anspruch 8, **dadurch gekennzeichnet, dass** das Spannelement (20) ringförmig ausgebildet und, im Querschnitt betrachtet, durch eine 7-förmig ausgebildete Feder (21) gebildet ist und einen zweiten Axialschenkel (22) und einen Stabilisierungsschenkel (23) aufweist und dass der zweite Axialschenkel (22) mit dem ersten Axialschenkel (1) und der Stabilisierungsschenkel (23) mit dem Dichtschenkel (2) verbunden ist.

10. Verwendung eines Dichtrings nach einem der Ansprüche 1 bis 9 in Tunnelbohrmaschinen oder Windkraftanlagen.

## Claims

1. Sealing ring which, as viewed in cross section, is designed in the shape of a 7, comprising a first axial limb (1) and a sealing limb (2) with a sealing lip (3), wherein the sealing limb (2) is connected by means of a first joint (4) to a first end face (5) of the first axial limb (1), wherein the sealing limb (2) on its side axially facing towards the first end face (5) has a dirt guard lip (6) with at least one sealing edge (7) and a radially inner first boundary surface (8) and a radially outer second boundary surface (9), wherein the sealing limb (2) and the dirt guard lip (6) delimit a substantially right angle (13, 14) radially on the inside and radially on the outside in the production-induced state of the sealing ring, the sealing lip (3) has a first diameter (15) and the sealing edge (7) has a second diameter (16), and wherein the first diameter (15) is smaller than the second diameter (16), **characterized in that** the first boundary surface (8) delimiting the right angle (13) radially on the inside of the dirt guard lip (6) has a first length (17) and a third boundary surface (18) of the sealing limb (2) has a third length (19) which differs from the first length (17), and **in that** the first length (17) is greater than the third length (19).

2. Sealing ring according to Claim 1, **characterized in that** the dirt guard lip (6) is articulated on the sealing limb (2) by means of a second joint (10).

3. Sealing ring according to Claim 2, **characterized in that** the second joint (10) has a radially inner joint radius (11) and a radially outer joint radius (12), as a result of which the dirt guard lip (6) is formed merging into the sealing limb (2).

4. Sealing ring according to Claim 3, **characterized in that** the inner joint radius (11) is greater than the outer joint radius (12).

5. Sealing ring according to Claim 4, **characterized in that** the ratio of the inner joint radius (11) to the outer joint radius (12) is at least two.

6. Sealing ring according to one of Claims 1 to 5, **characterized in that** the sealing limb (2) and the dirt guard lip (6) are formed merging into one another in one piece and from one and the same material and consist of a resiliently elastic sealing material.

7. Sealing ring according to Claim 1, **characterized in that** the second boundary surface (9) has a convex form along its extent.

8. Sealing ring according to one of Claims 1 to 7, **characterized in that** a clamping element (20) for stabilizing the sealing limb (2) in a radial direction is arranged on that side of the sealing limb (2) that axially faces away from the dirt guard lip (6), so as to merge from the sealing limb (2) into the first axial limb (1) .

9. Sealing ring according to Claim 8, **characterized in that** the clamping element (20) has an annular design and, as viewed in cross section, is formed by a spring (21) designed in the shape of a 7, and has a second axial limb (22) and a stabilizing limb (23), and **in that** the second axial limb (22) is connected to the first axial limb (1) and the stabilizing limb (23) is connected to the sealing limb (2).

10. Use of a sealing ring according to one of Claims 1 to 9 in tunnel boring machines or wind power plants.

## Revendications

1. Bague d'étanchéité qui, considérée en section transversale, est réalisée en forme de 7, comprenant une première branche axiale (1) et une branche d'étanchéité (2) dotée d'une lèvre d'étanchéité (3), la branche d'étanchéité (2) étant reliée au moyen d'une première articulation (4) à un premier côté frontal (5) de la première branche axiale (1), la branche d'étanchéité (2) présentant, sur son côté tourné axialement vers le premier côté frontal (5), une lèvre antisalissure (6) dotée d'au moins une arête d'étanchéité (7) et d'une première surface de limitation (8) radialement intérieure et d'une deuxième surface de limitation (9) radialement extérieure, la branche d'étanchéité (2) et la lèvre antisalissure (6) délimitant, dans l'état dû à la production de la bague d'étanchéité, radialement du côté intérieur et radialement du côté extérieur, un angle (13, 14) sensiblement droit, et respectivement dans l'état dû à la production de la bague d'étanchéité, la lèvre d'étanchéité (3) présentant un premier diamètre (15) et l'arête d'étanchéité (7) présentant un deuxième diamètre (16) et le premier diamètre (15) étant inférieur au deuxième diamètre (16), **caractérisée en ce que** la première surface de limitation (8) délimitant l'angle droit (13) radialement à l'intérieur de la lèvre d'étanchéité (6) présente une première longueur (17) et une troisième surface de limitation (18) de la branche d'étanchéité (2) présente une troisième longueur (19) différente de la première longueur (17) et **en ce que** la première longueur (17) est supérieure à la troisième longueur (19).

2. Bague d'étanchéité selon la revendication 1, **caractérisée en ce que** la lèvre antisalissure (6) est articulée sur la branche d'étanchéité (2) au moyen d'une deuxième articulation (10).

3. Bague d'étanchéité selon la revendication 2, **caractérisée en ce que** la deuxième articulation (10) présente un rayon d'articulation (11) radialement intérieur et un rayon d'articulation (12) radialement extérieur, par le biais desquels la lèvre antisalissure (6) est réalisée de manière à se prolonger dans la branche d'étanchéité (2).

4. Bague d'étanchéité selon la revendication 3, **caractérisée en ce que** le rayon d'articulation (11) intérieur est supérieur au rayon d'articulation (12) extérieur.

5. Bague d'étanchéité selon la revendication 4, **caractérisée en ce que** le rapport du rayon d'articulation (11) intérieur au rayon d'articulation (12) extérieur est d'au moins deux.

6. Bague d'étanchéité selon l'une quelconque des revendications 1 à 5, **caractérisée en ce que** la branche d'étanchéité (2) et la lèvre antisalissure (6) sont réalisées de manière à se prolonger d'une seule pièce l'une dans l'autre et en le même matériau et sont constituées d'une matière d'étanchéité présentant l'élasticité du caoutchouc.

7. Bague d'étanchéité selon la revendication 1, **caractérisée en ce que** la deuxième surface de limitation (9) est réalisée de manière convexe le long de son étendue.

8. Bague d'étanchéité selon l'une quelconque des revendications 1 à 7, **caractérisée en ce que**, sur le côté de la branche d'étanchéité (2) opposé axialement à la lèvre antisalissure (6), un élément de tension (20) est disposé de manière prolongée à partir de la branche d'étanchéité (2) dans la première branche axiale (1), pour la stabilisation de la branche d'étanchéité (2) dans la direction radiale.

9. Bague d'étanchéité selon la revendication 8, **caractérisée en ce que** l'élément de tension (20) est réalisé de manière annulaire et, considéré en section transversale, est formé par un ressort (21) réalisé en forme de 7 et présente une deuxième branche axiale (22) et une branche de stabilisation (23) et **en ce que** la deuxième branche axiale (22) est reliée à la première branche axiale (1) et la branche de stabilisation (23) est reliée à la branche d'étanchéité (2).

10. Utilisation d'une bague d'étanchéité selon l'une quelconque des revendications 1 à 9 dans des tunneliers ou des éoliennes.
